# EUROPEAN PATENT SPECIFICATION

(11) **EP 3 701 797 B1**
(45) Date of publication and mention of the grant of the patent: **09.08.2023**
(21) Application number: 19159494.4
(22) Date of filing: 26.02.2019
(51) Int. Cl.: A21B 3/04, F22B 13/00

(54) **OVEN COMPRISING A STEAM GENERATOR**
OFEN MIT EINEM DAMPFGENERATOR
FOUR COMPRENANT UN GÉNÉRATEUR DE VAPEUR

(43) Date of publication of application: 02.09.2020
(73) Proprietor: Electrolux Professional S.p.A., 33170 Pordenone (IT)
(72) Inventor: TURRIN, Daniele, 33170 Pordenone (IT); DANELUZZO, Dario, 33170 Pordenone (IT); FOGOLIN, Stefano, 33170 Pordenone (IT); ZAMBON, Piero, 33170 Pordenone (IT)
(74) Representative: AWA Sweden AB

(56) References cited:
- DE-U1- 20 321 767
- GB-A- 2 377 483
- US-A1- 2017 208 985

## Description

The present invention relates to an oven comprising a steam generator, and in particular to a professional oven for cooking food by steaming.

Known professional ovens are often equipped with a steam generator which generates steam by heating water up to its boiling point, by means of a heating element immersed in water. The flow of steam generated by the heating element is then conveyed, through a pipe, into the cooking cavity of the oven, in order to obtain a prefixed humidity degree in the interior thereof.

Typically, the steam generator comprises a liquid container adapted to contain water, and a heating element at least partially arranged in the liquid container for heating water contained therein.

Currently, most of the known steam generators for professional ovens are gas steam generators, called also gas boilers. Such known gas steam generators comprise a combustion chamber wherein a hot exhaust gas is generated by a gas burner, and then conveyed into a heat exchanger at least partially immersed in water.

With particular regard to the configuration of the heat exchanger, different solutions are currently known.

For example, DE20321767U1 and GB2285739A disclose gas boilers in which the heat exchanger comprises a plurality of pipes connected to the combustion chamber.

In other solutions, such as those described in EP1956300 and GB2347992B, corrugated pipes are adopted, in order to increase the heat exchange efficiency.

According to other solutions, such as the one described in EP0863365B1, the heat exchanger comprises a plurality of channels extending through the boiler, wherein such channels are formed by a bended plate.

US 2017/208985 A1 relates to a steam generator having a heating chamber with curved internal walls.

GB 2 377 483 A relates to a steam generator for a cooking device having heating elements external to the heating chamber.

Several drawbacks affect the steam generators currently used in professional ovens, such as those described above.

In particular, the main problem which affects all the known solutions regards the deposit and accumulation of limestone, in particular in the heating element of the steam generator.

The accumulation of limestone can therefore cover the heat exchange surface of the heating element, with the risk that the heating element overheats and can have mechanical problems due to thermal stress (e.g. deformation, cracks, etc.).

In addition, limestone covering the heating element reduces the thermal exchange, and increases the energy consumption needed for producing steam and, more in general, reduces the performances of the steam generator.

For all above reasons, known steam generators require to be periodically descaled in order to clean the surfaces of the heating element from the limestone. The aim of the invention is to provide an oven comprising a steam generator that overcomes the drawbacks of known ovens.

Within this aim, a further object of the invention is to provide an oven comprising a steam generator in which the risk of overheating and of consequent damages to the heating element due to the thermal stress is reduced.

A further object of the invention is to provide an oven comprising a steam generator which keeps the performances of the steam generator substantially unchanged for a long time.

Another object of the invention is to provide an oven which does not require frequent maintenance of the steam generator in order to restore the original performances of the latter. Still another object is to provide an oven comprising a steam generator, wherein the steam generator is particularly compact and efficient.

A further object is to provide an oven comprising a steam generator having a relatively uncomplex structure.

Applicant has understood that by providing an oven comprising a steam generator with an anti-limestone system configured for hindering the deposit of limestone on at least a portion of the heating element of the steam generator, the risk of overheating is highly reduced, and the steam generator can keep its performances substantially unchanged for a long time, without the need of the frequent and burdensome maintenance needed in prior art solutions. The anti-limestone system avoids, or at least hinders, that limestone settles on at least a portion of the heating element covering the heat exchange surface.

Therefore, frequent and burdensome manual maintenance of the steam generator for removing limestone from the heating element is no more necessary.

Preferably, the anti-limestone system is also configured to direct limestone towards the inner bottom of the liquid container, and more preferably towards the outlet of the liquid container, so that the limestone can be drained together with the liquid when the liquid container is emptied.

According to the invention, at least one inclined portion in the heating element of the steam generator is provided. The applicant has understood that limestone tends to slip away from the surface of such an inclined portion, and not to settle onto the latter.

Advantageously the liquid outlet of the liquid container is positioned in the liquid container in correspondence or in proximity of the lowest region of the inclined portion of the heating element of the liquid container, so that limestone removed from the latter is directed by gravity to the liquid outlet.

Still advantageously, applicant has understood that by providing a water jet generating device configured to generate one or more water jets hitting at least a portion of the heating element of the liquid container of the steam generator of the oven, it is possible to wash away the limestone from this portion of the heating element, so as to hinder its deposit on the latter, and favouring the drain of such limestone via the liquid drain.

According to the invention, it is provided an oven comprising a cooking chamber and a steam generator configured for releasing steam in within said cooking chamber, wherein said steam generator comprises a liquid container adapted to contain a liquid, a liquid inlet by which a liquid can enter the liquid container, a liquid outlet by which a liquid can exit the liquid container, and a heating element at least partially arranged in said liquid container for heating a liquid contained therein, wherein the oven comprises and anti-limestone system configured for hindering the deposit of limestone on at least a portion of the heating element.

In a preferred embodiment, the liquid container comprises an inner bottom, and the anti-limestone system is also configured for directing limestone to the inner bottom of the liquid container.

More preferably, the heating element is spaced from the inner bottom of the liquid container; in this way the risk that limestone collected on the inner bottom touches the heating element is highly reduced.

In a further preferred embodiment, the anti-limestone system is also configured for directing the limestone towards the liquid outlet of the liquid container.

Preferably, the liquid outlet of the inner container is positioned on the inner bottom of the latter.

The anti-limestone system comprises at least a portion of the heating element which is inclined with respect to a horizontal plane, when the oven is in an operative condition.

"Operative condition" is defined as a condition in which the oven is installed to be operated, and it lies in a horizontal, or substantial horizontal, plane such as the floor of a room or the internal bottom wall of a piece of furniture in which the oven is built-in.

It is to be understood that in the oven according to the invention, the inclination of the portion of the heating element allows the limestone flakes to slide away from such a portion, so that they do not constitute a hindrance to the correct functioning of the heating element.

Advantageously, the liquid outlet is provided in the liquid container in a position allowing at least part of, preferably all, the limestone removed from said portion (inclined) of said heating element, to reach said liquid outlet by gravity.

It has to be understood that "by gravity" means due, or mainly due, to the effect of the force of gravity on the limestone, which tends to move it from a higher position to a lower position. In this way, limestone moves directly towards the liquid outlet together with the liquid, without the need of specific moving devices, like for example a pump.

In a preferred embodiment, the liquid outlet is positioned within the liquid container in correspondence of or in proximity of the lowest region of the inclined portion of the inner bottom of the liquid container.

In an advantageous embodiment, the liquid outlet can be positioned in the inner bottom of the liquid container and at a level below the inclined portion of the heating element, so as to receive the limestone falling by gravity from the inclined portion.

More preferably, the liquid outlet can be positioned in a region of the inner bottom lateral with respect to the heating element.

According to the invention, the heating element of the steam generator comprises a gas burner and a heat exchanger.

The heat exchanger comprises a plurality of pipes configured for allowing the flow of gas heated-up by the gas burner.

The steam generator comprises a gas flow collector adapted to convey a gas flow heated-up by the gas burner towards the pipes of the heat exchanger, these pipes projecting from a top surface of the gas flow collector.

The at least a portion of the heating element inclined with respect to a horizontal plane comprises the top surface of the gas flow collector.

The inclined portion of the heating element is thus defined by the top surface of the gas collector, from which the pipes project. In this way the limestone flakes tend to fall down along the pipes and then to slide along the top surface of the gas collector, thus moving away from the hot components of the steam generator. The removal of deposits of limestone from the surfaces of the hot components of the heat exchanger prevents the same from overheating.

In particular, the limestone flakes tend to fall down from a higher region of the gas flow collector to the lowest region of the latter, and preferably, to an inner bottom of the liquid container, positioned below the collector, where no heating happens, and where, in a more preferred embodiment, the liquid outlet is positioned, from which limestone can be drained. In a preferred embodiment, the steam generator comprises a combustion chamber which accommodates the gas burner, and the combustion chamber is adjacent to the heat exchanger. This configuration of combustion chamber and pipes is significantly more compact than in the state of the art.

More preferably, the plurality of pipes extends along a straight direction.

Still more preferably, the combustion chamber extends along a direction substantially parallel to the direction of extension of the plurality of pipes.

In a further advantageous embodiment, the gas burner is accommodated in the gas flow collector, the gas flow collector thus defining a combustion chamber. Accommodating the gas burner directly inside the gas flow collector results in a steam generator which is significantly more compact than in the state of the art.

In a preferred embodiment, the pipes of the heat exchanger have an oval transversal cross section. The oval transversal cross section of the pipes increases the heat exchange efficiency of the heat exchanger.

In an advantageous embodiment, the pipes of the heat exchanger comprise one or more portions configured to increase the turbulence of a gas flow flowing inside the pipes. Preferably, the pipes comprise a plurality of these portions, distributed along the extension direction of the pipes.

More preferably, the one or more portions comprise externally embossed portions and/or internally engraved portions. The presence of deformed portions increases the heat exchange efficiency of the heat exchanger.

In an advantageous embodiment, the anti-limestone system comprises a water jet generating device configured to generate one or more water jets hitting at least a portion of the heating element.

The presence of water jet generating device results in an improved removal of the limestone flakes from the surface of the heating element.

Preferably, the water jet generating device comprises at least a washing pipe which comprises one or more outlet holes from which one or more water jets are ejected.

In a preferred embodiment, the washing pipe is positioned in such a way that the one or more outlet holes can eject one or more water jets at or in proximity of the highest region of the inclined portion of the heating element, the one or more water jets being oriented towards the lowest region of the heating element.

In a further preferred embodiment, the gas flow collector has a transversal cross section whose area decreases in size along the conveying direction of the hot gas flow within the gas flow collector. This results in a more homogenous distribution of the hot exhaust gas towards the plurality of pipes of the heat exchanger.

These and other features and advantages of the invention will be better apparent from the following description of some exemplary and non-limitative embodiments, to be read with reference to the attached drawings, wherein:
- Fig. 1 is a frontal view of an oven according to the present invention;
- Fig. 2 is a side view of a first embodiment of a steam generator of an oven according to the present invention;
- Fig. 3 is a perspective view of the steam generator of Fig. 2, shown with lateral walls removed;
- Fig. 4 is a lateral cross section of the steam generator of Fig. 2;
- Fig. 5 is a side view of a variant of the steam generator of Fig. 4;
- Fig. 6 is a side view of a second embodiment of a steam generator of an oven according to the present invention;
- Fig. 7 is a perspective view of the steam generator of Fig. 6, shown with lateral walls removed;
- Fig. 8 is a side view of the steam generator of Fig. 7, shown with top and bottom plates removed;
- Fig. 9 is a front view of the steam generator of Fig. 7;
- Fig. 10 is a side view of a variant of the steam generator of Fig. 8;
- Fig. 11 is a perspective view of a third embodiment of a steam generator of an oven according to the present invention;
- Fig. 12 is a side view of the steam generator of Fig. 11, shown with the top plate removed;
- Fig. 13 is a front view of the steam generator of Fig. 12;
- Fig. 14 is an enlarged portion of Fig. 13;
- Fig. 15 is a perspective view of water jet generating means belonging to the steam generator shown in Fig. 11.

With reference to attached Figures, number 100 indicates an oven comprising a cooking chamber 200 and a steam generator 1 configured for releasing steam within the cooking chamber 200.

According to a preferred embodiment, the steam generator 1 comprises a liquid container 3 adapted to contain a liquid, for example water, or water with an additive, and a heating element 2 at least partially arranged in the liquid container 3 for heating the liquid contained therein.

The liquid container 3 comprises a steam releasing duct 3c, fluidly connecting the internal of the liquid container 3 to the cooking chamber 200.

The steam generator 1 comprises a liquid inlet 3a by which a liquid can enter the liquid container 3, and a liquid outlet 3b by which a liquid can exit said liquid container 3.

The liquid container 3 comprises an inner bottom 31.

According to the invention, the oven 100 comprises an anti-limestone system configured for hindering the deposit of limestone on at least a portion 30 of the heating element 2.

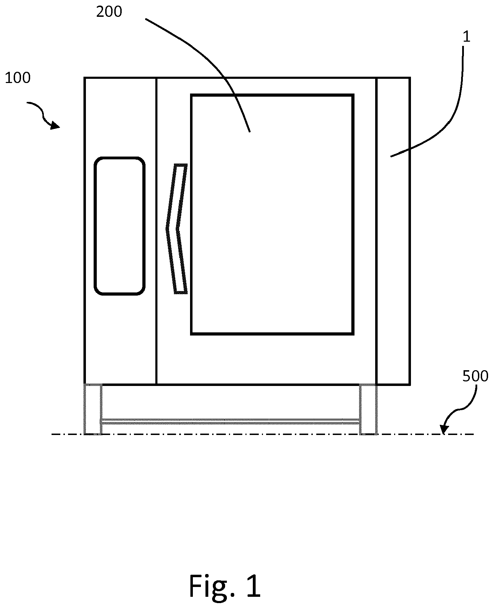

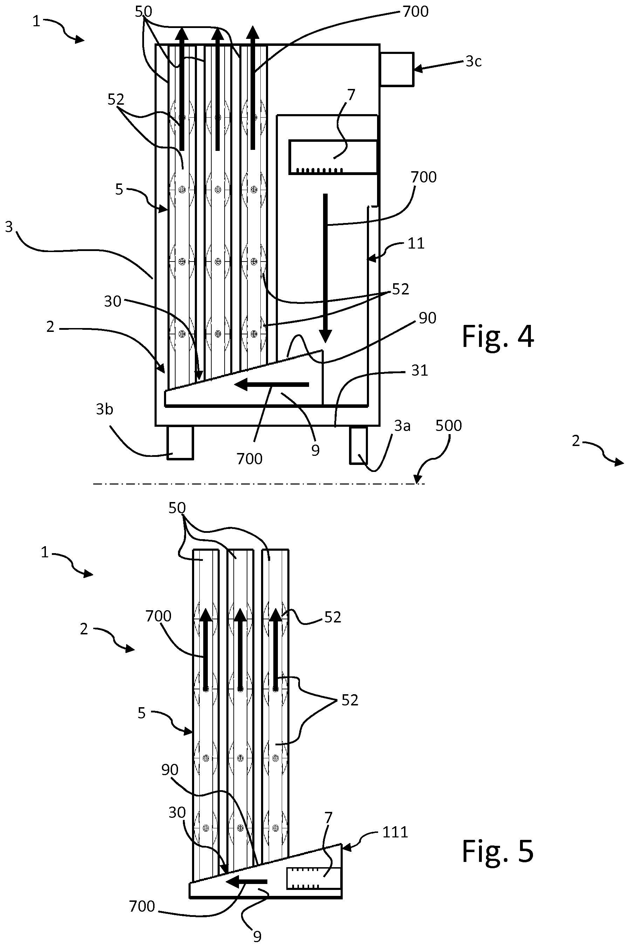

Advantageously, the anti-limestone system comprises at least a portion 30 of the heating element 2 which is inclined with respect to a horizontal plane, indicated schematically in figures 1 and 4 with number 500, when the oven 100 is in an operative condition.

"Operative condition" is defined as a condition in which the oven is installed to be operated, and it lies in a horizontal, or substantial horizontal, plane 500, such as the floor of a room or the internal bottom wall of a piece of furniture in which the oven is built-in.

Preferably, the heating element 2 comprises a gas burner 7 and a heat exchanger 5.

As it is known, the heating of a mass of water contained in a container results in the formation of limestone, generally in the form of flakes, which tends to attach to the surface of the heating element 2. As also better explained hereinafter, the inclined portion 30 of the heating element 2 allows such limestone flakes to slide away towards areas of the steam generator 1 where the presence of limestone does not constitute a hindrance to the correct functioning of the steam generator 1 itself.

Preferably, the liquid outlet 3b is provided in the liquid container 3 in a position allowing at least part of the limestone removed from the inclined portion 30 to reach the liquid outlet 3b by gravity.

More preferably, the liquid outlet 3b is positioned within the liquid container 3 in correspondence or in proximity of the lowest region 30a of the inclined portion 30.

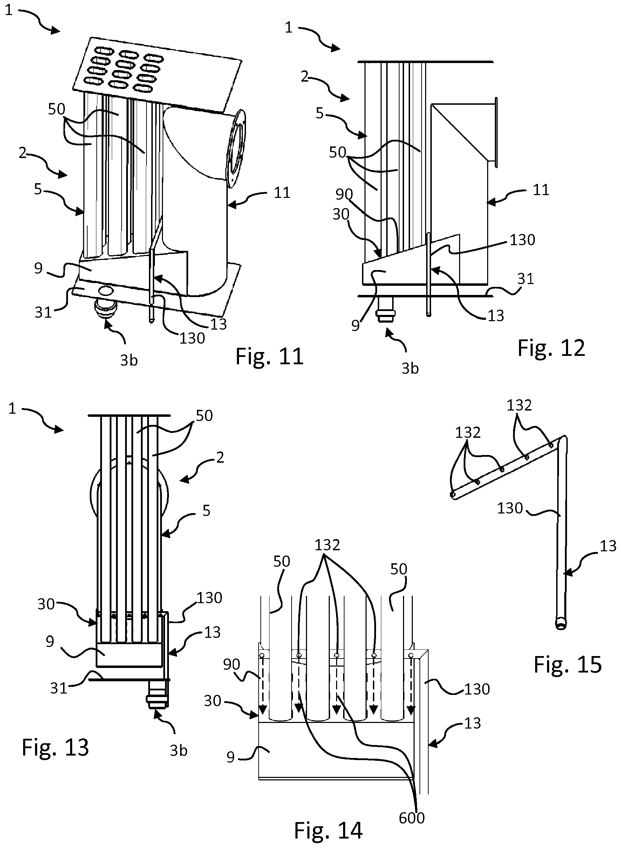

For example, as in the advantageous example of Figure 11, the liquid outlet 3b can be positioned in the inner bottom 31, positioned at a level below the inclined portion 30, so to receive the limestone falling from the inclined portion 30.

Preferably, as in the advantageous embodiment of Figure 11, the liquid outlet 3a can be positioned in a region of the inner bottom 31 lateral with respect to the inclined portion 30. Preferably, the heat exchanger 5 comprises a plurality of pipes 50 in which a gas flow heated-up by the gas burner 7 flows. Therefore, the steam generator 1 is preferably a gas steam generator, or a gas boiler.

According to a preferred embodiment of the invention, the steam generator 1 comprises a gas flow collector 9 adapted to convey the gas flow heated-up by the gas burner 3 towards the pipes 50 of the heat exchanger 5. The pipes 50 project from a top surface 90 of the gas flow collector 9. The portion 30 of heating element 2 inclined with respect to a horizontal plane comprises said top surface 90 of the gas flow collector 9.

The inclined portion 30 is thus advantageously defined by the top surface 90 of the gas flow collector 9, from which the pipes 50 project upwards. In this way the limestone flakes which form in the water tend to fall down along the pipes 50 and then to slide along the top surface 90 of the gas flow collector 9, thus moving away from the hot components of the steam generator 1. The removal of deposits of limestone from the surfaces of the hot components of the heat exchanger 5 prevents the same from overheating and therefore from possible risks of thermal breakage.

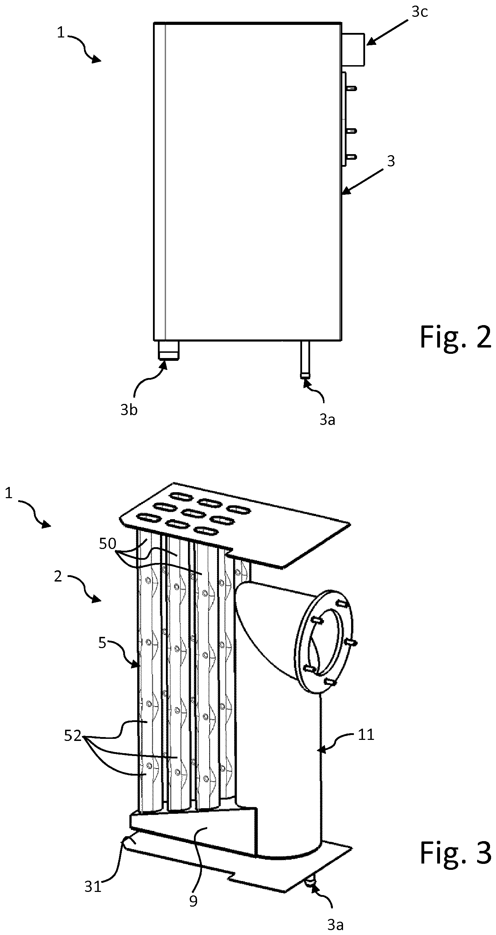

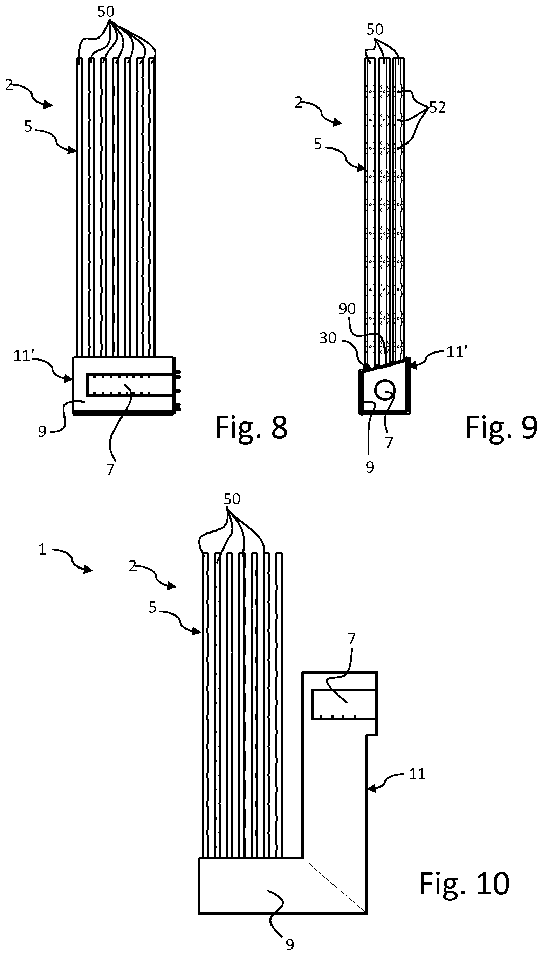

As shown in the embodiments depicted respectively in figures 2 to 4 and 10 to 14, the steam generator 1 advantageously comprises a combustion chamber 11 which accommodates the gas burner 7, wherein the combustion chamber 11 is preferably adjacent to the heat exchanger 5 and more preferably extends along a direction substantially parallel to the direction of extension of the plurality of pipes 50. Such configuration of combustion chamber 11 and pipes 50 results in a steam generator 1 which is very compact.

As shown in the embodiments depicted respectively in figures 5 to 9, the steam generator 1 comprises a gas flow collector 9 adapted to convey the gas flow heated-up by the gas burner 7 towards the pipes 50 of the heat exchanger 5, wherein the gas burner 7 is accommodated in the gas flow collector 9. In this way the gas flow collector 9 defines a combustion chamber 11'. According to this embodiment, the steam generator 1 can be even more compact than the steam generator 1 of the embodiment described above. Advantageously, the hot gas flow is thus generated directly inside the gas flow collector 9.

Preferably, the pipes 50 have an oval transversal cross section, so as to increase the surface in contact with the water contained in the liquid container 3 and thus to improve the thermal efficiency.

Furthermore, the pipes 5 can advantageously comprise a plurality of portions 52 configured to increase the turbulence of the gas flow which flows inside the pipes 50. Said portions 52 are preferably distributed along the extension direction of the pipes 50 themselves. Increasing the turbulence of the hot gas flow results in an increase of the heat exchange capabilities.

As shown in the figures said portions 52 preferably comprise internally engraved portions. However, said portions 52 can also advantageously comprise externally embossed portions.

Advantageously, as shown in figures 11to 15, the anti-limestone system can comprise a water jet generating device configured to generate one or more water jets, for example the ones schematically indicated in Figure 14 with arrows 600, hitting the portion 30 of the heating element 2.

Such one or more water jets 600 help the removal of the limestone flakes from the portion 30, and favours the drain of such a limestone by the liquid outlet 3b.

Preferably, the water jet generating device 13 is configured to generate one or more water jets 600 along the portion 30 which is inclined with respect to a horizontal plane.

In this case, such one or more water jets 600 help the removal of the limestone flakes from the inclined portion 30.

Preferably the water jet generating device 13 comprises at least a washing pipe 130 which comprises one or more outlet holes 132 from which one or more water jets 600 are ejected. Preferably, the washing pipe 130 is positioned in such a way that the one or more outlet holes 132 can eject the one or more water jets 600 at or in proximity of the highest region 30b of the inclined portion 30, the one or more water jets 600 being oriented towards the lowest region 30a of the inclined portion 30.

Advantageously, like in the preferred examples shown respectively in figures 3 to 5 and 11 to 14, the gas flow collector 9 can have a transversal cross section whose area decreases in size along the conveying direction of the hot gas flow (which flow is indicated for example schematically in Figures 4 and 5 by arrows 700) within the gas flow collector 9 itself.

The fact that the transversal section of the gas flow collector 9 decreases along its length, allows a more homogenous distribution of the hot exhaust gas towards the plurality of pipes 50 of the heat exchanger 5. Inside the gas flow collector 9, the flow of gas is indeed accelerated in the direction going from the gas burner 7 to the various inlets of the pipes 50 by the reduction in section of the gas flow collector 9 itself, thus compensating for the pressure drop which happens in the same direction.

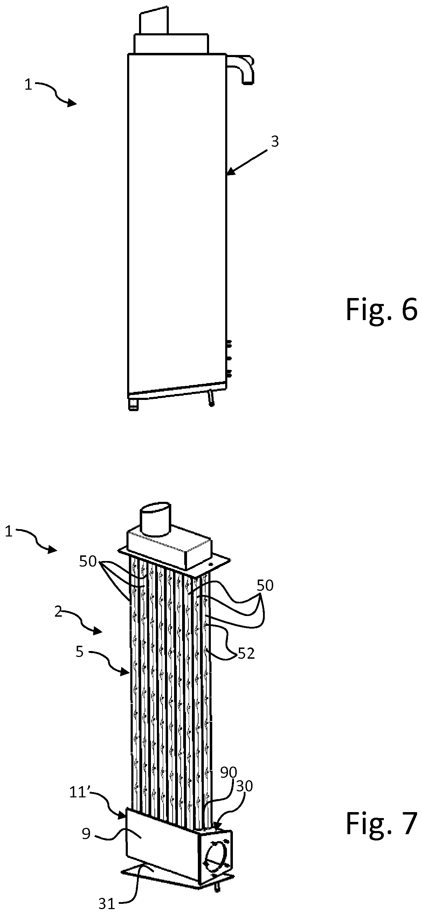

Advantageously, like in the examples of figures 7, 8, 9, the longitudinal section of the gas flow collector 9 can decrease along its width, so that the top surface 90 of the gas flow collector 9 can be inclined laterally with respect to the longitudinal direction of the gas burner 7.

The functioning of the oven according to the invention is the following.

A liquid, like water, demineralized water, water with an additive can be loaded in the liquid container 3 of the steam generator 1, via the liquid inlet 3a.

This liquid can be heated using the heating element 2 of the steam generator 1, so as to generate steam, that can be released into the cooking chamber of the oven 1, for example during the cooking, via the steam releasing duct 3c.

Due to the high temperature, limestone tends to separate from the water container in the liquid container, but, thanks to the anti-limestone system, its deposit on the heating element 2 is hindered.

In particular, in the advantageous embodiment in which at least a portion 30 of the heating element 2 is inclined with respect to a horizontal plane 500, the inclination of such a portion 30 hinders the deposit on the same of the limestone; flakes of limestone tends in fact to slide away from the inclined portion 30, and to be directed to a position (e.g. the inner bottom 31) where they do not hinder the heat exchange with the heating element 2 and in a position in which they can be easily drained via the liquid outlet 3b, together with the liquid, when the liquid container is emptied.

In the advantageous embodiment in which the anti-limestone system comprises the water jet generating device 13, the one or more water jets washes away the flakes of limestone from at least a portion of the heating element 2, and in particular from the portion in which the limestone could hinder the correct functioning of the steam generator 1, and they take this limestone to the liquid outlet 3b, so that it can be easily drained together with the liquid when the steam generator 1 is emptied.

It is seen therefore how the invention achieves the proposed aim and objects, there being provided an oven comprising a steam generator which, thanks to the anti-limestone system, the risk of overheating and of consequent damages due to the thermal stress is reduced.

In addition, the steam generator can keep its performances substantially unchanged for a long time, without the need of a frequent maintenance.

In addition, the steam generator is particularly compact and efficient, and has a relatively uncomplex structure.

## Claims

1. Oven (100) comprising a cooking chamber (200) and a steam generator (1) configured for releasing steam within said cooking chamber (200), wherein said steam generator (1) comprises a liquid container (3) adapted to contain a liquid, a liquid inlet (3a) by which a liquid can enter the liquid container (3), a liquid outlet (3b) by which a liquid can exit said liquid container (3), a steam releasing duct (3c), fluidly connecting the internal of the liquid container (3) to the cooking chamber (200), and a heating element (2) at least partially arranged in said liquid container (3) for heating a liquid contained therein, said heating element comprising a gas burner (7) and a heat exchanger (5), wherein said heat exchanger (5) comprises a plurality of pipes (50) configured for allowing the flow of gas heated-up by said gas burner (7),
**characterised in that**
said oven (100) comprises an anti-limestone system configured for hindering the deposit of limestone on at least a portion (30) of said heating element (2), wherein said portion (30) of said heating element (2) is inclined with respect to a horizontal plane (500) when said oven (100) is in an operative condition, and wherein said steam generator (1) comprises a gas flow collector (9) adapted to convey a gas flow (700) heated-up by said gas burner (3) towards said pipes (50) of said heat exchanger (5), said pipes (50) projecting from a top surface (90) of said gas flow collector (9), and wherein said at least a portion (30) of said heating element (2) inclined with respect to an horizontal plane (500) comprises said top surface (90) of said gas flow collector (9).

2. Oven (100) according to claim 1, wherein said liquid container (3) comprises an inner bottom (31), and wherein said anti-limestone system is configured for directing limestone to said inner bottom (31) of said liquid container (3).

3. Oven (100) according to claim 1 or 2, wherein said anti-limestone system is configured for directing limestone to said liquid outlet (3b) of said liquid container (3).

4. Oven according to one or more of the previous claims, wherein said liquid outlet (3b) is provided in said liquid container (3) in a position allowing at least part of the limestone removed from said portion (30) of said heating element (2) to reach said liquid outlet (3b) by gravity.

5. Oven, according to claim 1, wherein said steam generator (1) comprises a combustion chamber (11) which accommodates said gas burner (7), wherein said combustion chamber (11) is adjacent to said heat exchanger (5).

6. Oven, according to claim 5, wherein said gas burner (7) is accommodated in said gas flow collector (9), said gas flow collector (9) thus defining a combustion chamber (11').

7. Oven, according to one or more of the preceding claims, **characterised in that** said anti-limestone system comprises a water jet generating device (13) configured to generate one or more water jets (600) hitting said at least a portion (30) of said heating element (2).

8. Oven, according to claim 7, **characterised in that** said water jet generating device (13) comprises at least a washing pipe (130) which comprises one or more outlet holes (132) from which said one or more water jets (600) are ejected.

9. Oven, according to claim 8 when depending on claim 2, **characterised in that** said washing pipe (130) is positioned in such a way that said one or more outlet holes (132) can eject one or more water jets (600) at or in proximity of the highest region (30b) of said inclined portion (30) of the heating element (2), said one or more water jets (600) being oriented towards the lowest region (30a) of said inclined portion (30).

10. Oven, according to one or more of claims 5 to 9, **characterised in that** said gas flow collector (9) has a transversal cross section whose area decreases in size along the conveying direction of said hot gas flow (700) within said gas flow collector (9).

## Patentansprüche

1. Ofen (100) mit einem Garraum (200) und einem Dampfgenerator (1), der so konfiguriert ist, dass er Dampf in den Garraum (200) freisetzt, wobei der Dampfgenerator (1) einen Flüssigkeitsbehälter (3) umfasst, der so angepasst ist, dass er eine Flüssigkeit enthält, einen Flüssigkeitseinlass (3a), durch den eine Flüssigkeit in den Flüssigkeitsbehälter (3) eintreten kann, einen Flüssigkeitsauslass (3b), durch den eine Flüssigkeit aus dem Flüssigkeitsbehälter (3) austreten kann, eine Dampfabgabeleitung (3c) umfasst, die das Innere des Flüssigkeitsbehälters (3) mit dem Garraum (200) fluidisch verbindet, und ein Heizelement (2), das mindestens teilweise in dem Flüssigkeitsbehälter (3) angeordnet ist, um eine darin enthaltene Flüssigkeit zu erhitzen, wobei das Heizelement einen Gasbrenner (7) und einen Wärmetauscher (5) umfasst, wobei der Wärmetauscher (5) eine Vielzahl von Rohren (50) umfasst, die so konfiguriert sind, dass sie den Fluss von durch den Gasbrenner (7) erhitztem Gas ermöglichen,
**dadurch gekennzeichnet, dass**
der Ofen (100) ein Anti-Kalkstein-System umfasst, das so konfiguriert ist, dass es die Ablagerung von Kalkstein auf mindestens einem Abschnitt (30) des Heizelements (2) verhindert, wobei der Abschnitt (30) des Heizelements (2) in Bezug auf eine horizontale Ebene (500) geneigt ist, wenn der Ofen (100) in einem Betriebszustand ist, und wobei der Dampfgenerator (1) einen Gasstromsammler (9) umfasst, der so angepasst ist, dass er einen durch den Gasbrenner (3) erhitzten Gasstrom (700) zu den Rohren (50) des Wärmetauschers (5) leitet, wobei die Rohre (50) von einer oberen Fläche (90) des Gasstromsammlers (9) vorstehen, und wobei der mindestens eine Abschnitt (30) des Heizelements (2), der in Bezug auf eine horizontale Ebene (500) geneigt ist, die obere Fläche (90) des Gasstromsammlers (9) umfasst.

2. Ofen (100) nach Anspruch 1, wobei der Flüssigkeitsbehälter (3) einen inneren Boden (31) umfasst und wobei das Anti-Kalkstein-System so konfiguriert ist, dass es Kalkstein zu dem inneren Boden (31) des Flüssigkeitsbehälters (3) leitet.

3. Ofen (100) nach Anspruch 1 oder 2, wobei das Anti-Kalkstein-System so konfiguriert ist, dass es Kalkstein zu dem Flüssigkeitsauslass (3b) des Flüssigkeitsbehälters (3) leitet.

4. Ofen nach einem oder mehreren der vorhergehenden Ansprüche, wobei der Flüssigkeitsauslass (3b) in dem Flüssigkeitsbehälter (3) in einer Position vorgesehen ist, die es ermöglicht, dass mindestens ein Teil des Kalksteins, der von dem Abschnitt (30) des Heizelements (2) entfernt wurde, durch Schwerkraft zu dem Flüssigkeitsauslass (3b) gelangt.

5. Ofen nach Anspruch 1, wobei der Dampfgenerator (1) eine Brennkammer (11) umfasst, die den Gasbrenner (7) aufnimmt, wobei die Brennkammer (11) benachbart zum Wärmetauscher (5) liegt.

6. Ofen nach Anspruch 5, wobei der Gasbrenner (7) in dem Gasstromsammler (9) aufgenommen ist und der Gasstromsammler (9) somit eine Brennkammer (11') definiert.

7. Ofen nach einem oder mehreren der vorhergehenden Ansprüche, **dadurch gekennzeichnet, dass** das Anti-Kalkstein-System eine Wasserstrahl-Erzeugungsvorrichtung (13) umfasst, die so konfiguriert ist, dass sie einen oder mehrere Wasserstrahlen (600) erzeugt, die auf den mindestens einen Abschnitt (30) des Heizelements (2) treffen.

8. Ofen nach Anspruch 7, **dadurch gekennzeichnet, dass** die Wasserstrahl-Erzeugungsvorrichtung (13) mindestens ein Waschrohr (130) umfasst, das ein oder mehrere Auslasslöcher (132) umfasst, aus denen der eine oder die mehreren Wasserstrahlen (600) ausgestoßen werden.

9. Ofen nach Anspruch 8, wenn abhängig von Anspruch 2, **dadurch gekennzeichnet, dass** das Waschrohr (130) so positioniert ist, dass das eine oder die mehreren Auslasslöcher (132) einen oder mehrere Wasserstrahlen (600) am oder in der Nähe des höchsten Bereichs (30b) des geneigten Abschnitts (30) des Heizelements (2) ausstoßen können, wobei der eine oder die mehreren Wasserstrahlen (600) auf den untersten Bereich (30a) des geneigten Abschnitts (30) ausgerichtet sind.

10. Ofen nach einem oder mehreren der Ansprüche 5 bis 9, **dadurch gekennzeichnet, dass** der Gasstromsammler (9) einen Querschnitt aufweist, dessen Fläche entlang der Förderrichtung des heißen Gasstroms (700) innerhalb des Gasstromsammlers (9) abnimmt.

## Revendications

1. Four (100) comprenant une chambre de cuisson (200) et un générateur de vapeur (1) configuré pour libérer de la vapeur à l'intérieur de ladite chambre de cuisson (200), dans lequel ledit générateur de vapeur (1) comprend un récipient à liquide (3) adapté pour contenir un liquide, une entrée de liquide (3a) par laquelle un liquide peut entrer dans le récipient à liquide (3), une sortie de liquide (3b) par laquelle un liquide peut sortir dudit récipient à liquide (3), un conduit de libération de vapeur (3c), raccordant fluidiquement l'intérieur du récipient à liquide (3) à la chambre de cuisson (200), et un élément chauffant (2) au moins partiellement agencé dans ledit récipient à liquide (3) pour chauffer un liquide contenu à l'intérieur, ledit élément chauffant comprenant un brûleur à gaz (7) et un échangeur de chaleur (5), dans lequel ledit échangeur de chaleur (5) comprend une pluralité de tuyaux (50) configurés pour permettre l'écoulement de gaz réchauffé par ledit brûleur à gaz (7),
**caractérisé en ce que**
ledit four (100) comprend un système anti-calcaire configuré pour empêcher le dépôt de calcaire sur au moins une partie (30) dudit élément chauffant (2), dans lequel ladite partie (30) dudit élément chauffant (2) est inclinée par rapport à un plan horizontal (500) lorsque ledit four (100) est dans un état de fonctionnement, et dans lequel ledit générateur de vapeur (1) comprend un collecteur de flux de gaz (9) adapté pour transporter un flux de gaz (700) réchauffé par ledit brûleur à gaz (3) vers lesdits tuyaux (50) dudit échangeur de chaleur (5), lesdits tuyaux (50) dépassant en saillie d'une surface de sommet (90) dudit collecteur de flux de gaz (9), et dans lequel ladite au moins une partie (30) dudit élément chauffant (2) inclinée par rapport à un plan horizontal (500) comprend ladite surface supérieure (90) dudit collecteur de flux de gaz (9).

2. Four (100) selon la revendication 1, dans lequel ledit réservoir de liquide (3) comprend un fond intérieur (31), et dans lequel ledit système anti-calcaire est configuré pour diriger le calcaire vers ledit fond intérieur (31) dudit récipient à liquide (3).

3. Four (100) selon la revendication 1 ou 2, dans lequel ledit système anti-calcaire est configuré pour diriger le calcaire vers ladite sortie de liquide (3b) dudit réservoir de liquide (3).

4. Four selon une ou plusieurs des revendications précédentes, dans lequel ladite sortie de liquide (3b) est prévue dans ledit réservoir de liquide (3) dans une position permettant à au moins une partie du calcaire retiré de ladite partie (30) dudit élément chauffant (2) d'atteindre ladite sortie de liquide (3b) par gravité.

5. Four selon la revendication 1, dans lequel ledit générateur de vapeur (1) comprend une chambre de combustion (11) qui renferme ledit brûleur à gaz (7), dans lequel ladite chambre de combustion (11) est adjacente audit échangeur de chaleur (5).

6. Four selon la revendication 5, dans lequel ledit brûleur à gaz (7) est renfermé dans ledit collecteur de flux de gaz (9), ledit collecteur de flux de gaz (9) définissant ainsi une chambre de combustion (11').

7. Four selon une ou plusieurs des revendications précédentes, **caractérisé en ce que** ledit système anticalcaire comprend un dispositif de génération de jet d'eau (13) configuré pour générer un ou plusieurs jets d'eau (600) frappant ladite au moins une partie (30) dudit élément chauffant (2).

8. Four selon la revendication 7, **caractérisé en ce que** ledit dispositif de génération de jets d'eau (13) comprend au moins un tuyau de lavage (130) qui comprend un ou plusieurs orifices de sortie (132) d'où lesdits un ou plusieurs jets d'eau (600) sont éjectés.

9. Four selon la revendication 8 lorsqu'elle dépend de la revendication 2, **caractérisé en ce que** ledit tuyau de lavage (130) est positionné de telle manière que lesdits un ou plusieurs trous de sortie (132) puissent éjecter un ou plusieurs jets d'eau (600) au niveau ou à proximité de la région la plus élevée (30b) de ladite partie inclinée (30) de l'élément chauffant (2), lesdits un ou plusieurs jets d'eau (600) étant orientés vers la région la plus basse (30a) de ladite partie inclinée (30).

10. Four, selon une ou plusieurs des revendications 5 à 9, **caractérisé en ce que** ledit collecteur de flux de gaz (9) a une section transversale dont la surface diminue en taille le long de la direction de transport dudit flux de gaz chaud (700) à l'intérieur dudit collecteur de flux de gaz (9).
